Europäisches Patentamt

European Patent Office

Office européen des brevets

(11) Publication number: **0 113 511**
**A2**

## (12) EUROPEAN PATENT APPLICATION

(21) Application number: **83306970.1**

(22) Date of filing: **15.11.83**

(51) Int. Cl.³: **C 08 J 9/22**

(30) Priority: **15.11.82 GB 8232569**

(43) Date of publication of application:
**18.07.84 Bulletin 84/29**

(84) Designated Contracting States:
**AT BE CH DE FR GB IT LI LU NL SE**

(71) Applicant: **DIXON INTERNATIONAL LIMITED**

**Pampisford Cambridge CB2 4HG(GB)**

(72) Inventor: **Malcolm-Brown Tessa**
**Pampisford Court**
**Pampisford Cambridge(GB)**

(74) Representative: **Seaborn, George Stephen et al,**
**c/o Edward Evans & Co. Chancery House 53-64 Chancery Lane**
**London WC2A 1SD(GB)**

(54) Flame-resistant expanded plastics material.

(57) The invention provides an expanded plastics material having distributed therethrough a fire-resistant powder (as defined herein).

The invention also provides a metod of manufacturing expanded plastics material, comprising: subjecting expandable beads or granules of the plastics material to pre-expansion; and subsequently moulding the pre-expanded beads or granules; wherein prior to the moulding, the beads or granules are mixed with a fire-resistant powder.

The invention also provides a method of manufacturing a polyurethane foam, comprising mixing a fire-resistant powder (as herein defined) with a polyester or polyether having free hydroxy groups and effecting reaction of the polyester or polyether with a di- or triisocyanate to form the polyurethane foam.

EP 0 113 511 A2

## Flame-Resistant Expanded Plastics Material

The present invention relates to a flame-resistant expanded plastics material and to a method of manufacturing such material. Such material may be expanded polystyrene (EPS) or other styrene polymer or polyurethane (PU) foam.

It is well known that expanded plastics material, e.g. expanded polystyrene, can be highly flammable and liable to hot-drip and thus the versatility of such material is limited.

EPS can be given a degree of flame-resistance by incorporating within it a halogen-containing plasticizer, such as tri(bromopropyl) phosphate. Such EPS is flame-resistant in the sense that it ceases to burn when removed from an applied flame. Nevertheless the EPS is still liable to hot-drip.

The term "hot-drip" refers to the hot and possibly flaming drops of molten plastics material which drip from burning conventional EPS and other expanded plastics material.

It has now been discovered that it is possible to manufacture expanded plastics material which is flame-resistant. In particular on exposure of a test sample of the material to a Bunsen burner flame it does not burn but simply gently contracts and collapses without any hot-drip.

In accordance with a first aspect of the invention, there is provided an expanded plastics material having distributed therethrough a fire-resistant powder as defined below. The expanded plastics material may be EPS or other styrene polymer or PU foam.

In accordance with a second aspect of the present invention, there is provided a method of manufacturing expanded plastics material, comprising: subjecting beads or granules of the plastics material to pre-expansion; and subsequently moulding and expanding the pre-expanded beads or granules; wherein prior to the moulding and expanding the beads or granules are mixed with a fire-resistant powder as defined below. In this aspect of the invention, the plastics material is typically polystyrene or other styrene polymer.

The fire-resistant powder is preferably mixed with the beads or granules after the pre-expansion and more preferably whilst the outer surfaces of the beads or granules are still soft or wet following the pre-expansion.

It is alternatively possible to mix the fire-resistant powder with the beads or granules prior to the pre-expansion.

The amount of the fire-resistant powder is preferably 5 to 30 parts by volume per 100 parts by volume of the pre-expanded beads or granules.

In accordance with a third aspect of the present invention, there is provided a method of manufacturing a polyurethane foam, comprising mixing a fire-resistant powder as defined below with a polyester or polyether and effecting reaction of the polyester or polyether to form the polyurethane foam. It will be understood that the polyester or polyether has free hydroxy groups. Further, it will be understood that the polyester or polyether is reacted with a di- or triisocyanate in forming the polyurethane foam or the polyether has isocyanate groups in the molecule.

The amount of the fire-resistant powder is preferably 40 to 60% by weight based on the plastics material (excluding the fire-resistant powder).

The fire-resistant powder is an intumescent material or comprises the ingredients of an intumescent material. Intumescent materials are well known as materials which on being subjected to elevated temperature, as under fire conditions, expand to form a voluminous coherent mass or solid foam, which can be used to seal gaps against passage of flame and gaseous combustion products.

The intumescent material preferably comprises a carbonific and a spumific and preferably further comprises an activator and a binder.

The carbonific is a source of carbonaceous char when the intumescent material is subjected to heat. It is the principal constituent of the foam that is formed when the intumescent material is exposed to elevated temperature. Polyhydric organic compounds such as mono-, di- and tri-pentaerythritols and starch are examples of carbonifics.

The spumific decomposes under fire conditions and releases gases which cause the carbon char to expand. Dicyandiamide, guanidine and urea are examples of spumifics.

The activator (or catalyst) is a material that promotes the decomposition of the carbonific. Monoammonium phosphate and other sources of phosphoric acid are examples of activators.

The binder is commonly an amino resin, such as urea-formaldehyde resin or melamine-formaldehyde resin. The amino resin also acts to some extent as a carbonific and a spumific. The binder serves to form a skin over the carbonaceous char and prevents or inhibits the escape of trapped gases.

The intumescent material used in the present invention preferably comprises melamine formaldehyde resin as the binder.

The ingredients of the intumescent material may be added as a dry powder mix of the ingredients to the beads or granules of expanded plastics material. Alternatively the ingredients of the intumescent material may be mixed together with water, allowed to harden, and the hardened product dried and converted into powder and added to the beads or granules.

Alternatively the intumescent material may be a silicate-based intumescent material.

When the expanded plastics material according to the invention is subjected to flame, the intumescent material intumesces and serves to fill the voids left by the collapsing plastics material with char or intumescent material which acts as a flame barrier.

It may be preferred, particularly when the plastics material may be subjected to relatively gentle heating, that the intumescent material is such that intumescence of the material begins at a temperature in the range between the softening temperature and the flow temperature of the plastics material. However, if the plastics material is only likely to be subjected to fierce heating and hence a rapid temperature rise it may be satisfactory if the temperature at which intumescence of the intumescent material begins is outside this range i.e. below the softening temperature of plastics material or above the flow temperature of the plastics material.

Suitable intumescent material for use in the present invention is described in our British patent no. 1601131. The compositions disclosed in that patent comprise polyvinyl acetate as a binder (in addition to melamine formaldehyde resin), a fibrous reinforcing material, such as wood flour, and a setting agent, such as plaster of Paris. However, it is unnecessary to include such polyvinyl acetate, fibrous reinforcing material and setting agent in the intumescent material used in the present invention.

The invention illustrated by the following example.

Example
A. Preparation of intumescent material powder
The following materials are mixed together in the stated amounts together with an amount of water sufficient to form a paste:

| Water-soluble (i.e. uncrosslinked) | |
|---|---|
| melamine-formaldehyde resin powder | 3800 g |
| Pentaerythritol | 800 g |
| Monoammonium phosphate | 4200 g |
| Dicyandiamide | 2000 g |

The above proportions are not critical and may be varied by e.g. ± 20%.

The resulting paste is allowed to harden over a period of 1 to 3 days and then baked under gentle heat (40 to 90°C) for two to six hours to dry the hardened material and complete curing of the melamine-formaldehyde resin. The hardened material is then ground into a powder by ball-milling.

B. Manufacture of flame-resistant expanded polystyrene

Expandable polystyrene beads, which are free-flowing and translucent, are subjected in conventional manner to pre-expansion using dry steam at 110°C. This increases the volume of the beads by 20 to 40 times as pentane contained as a solid solution in the beads vaporizes.

The pre-expanded beads are sticky on their surfaces and the beads, in an amount of 100 parts by volume, are mixed with 25 parts by volume of the powder prepared in Stage A above (i.e. approximately equal parts by weight of the beads and powder are mixed).

The powder is apt to stick to the surfaces of the beads.

The pre-expanded beads are then allowed to mature in conventional manner.

The matured beads are then moulded in conventional manner in moulds and using steam to produce moulded expanded polystyrene products, e.g. blocks, which are rigid and lightweight consisting of large multicellular particles surface-bonded together, so that the moulded products are ventile. During this moulding the beads expand further and more pentane escapes from them. The expanded products are allowed to dry and, as they do so, the remaining pentane evaporates.

C. Testing of flame-resistance of expanded polystyrene blocks

The blocks produced in Stage B when subjected to a flame e.g. from a Bunsen burner, a blowlamp or oxyacetylene torch do not burst into flame and there is no hot dripping. The blocks gently collapse under the heat and the intumescent material contained in the blocks swells up and gives a black carbonaceous expanded mass. It appears that one or more constituents of the intumescent material permeate the polystyrene thereby preventing it from igniting.

In this example, the softening temperature of the polystyrene is about 100°C and the flow temperature of the polystyrene is about 155°C. The intumescent material starts to intumesce at about 125°C.

## CLAIMS

1.      An expanded plastics material having distributed therethrough a fire-resistant powder (as defined herein).

2.      A material according to claim 1, being expanded polystyrene or other styrene polymer.

3.      A material according to claim 1, being polyurethane foam.

4.      A material according to any preceding claim, wherein the fire-resistant powder comprises a carbonific and a spumific.

5.      A material according to claim 4, wherein the fire-resistant powder further comprises an activator.

6.      A material according to claim 4 or 5, wherein the fire-resistant powder further comprises a binder.

7.      A material according to any preceding claim, comprising 40 to 60% by weight of the fire-resistant powder based on the weight of the plastics material excluding the fire-resistant powder.

8.      A material according to any preceding claim, wherein the temperature at which the intumescent material provided by the fire-resistant powder begins to intumesce on heating is between the softening temperature and the flow temperature of the plastics material.

9.      An expanded plastics material according to claim 1 and substantially as herein described in the Example.

10.      A method of manufacturing expanded plastics material, comprising subjecting expandable beads or granules of the plastics material to pre-expansion; and subsequently moulding and expanding the pre-expanded beads or granules; wherein prior to the moulding and expanding, the beads or granules are mixed with a fire-resistant powder (as defined herein).

11.     A method according to claim 10, wherein the plastics material is polystyrene or other styrene polymer.

12.     A method according to claim 10 or 11, wherein the fire-resistant powder is mixed with the beads or granules after pre-expansion.

13.     A method according to claim 12, wherein the fire-resistant powder is mixed with the beads or granules whilst the outer surfaces of the beads or granules are still soft or wet following the pre-expansion.

14.     A method according to claim 10 or 11, wherein the fire-resistant powder is mixed with the beads or granules prior to the pre-expansion.

15.     A method according to any of claims 10 to 14, wherein the amount of the fire-resistant powder is 5 to 30 parts by volume per 100 parts by volume of the pre-expanded beads or granules.

16.     A method of manufacturing a polyurethane foam, comprising mixing a fire-resistant powder (as herein defined) with a polyester or polyether having free hydroxy groups, and effecting reaction of the polyester or polyether to form the polyurethane foam, either the polyester or polyether being reacted with a di- or triisocyanate in forming the polyurethane foam or the polyether having isocyanate groups in the molecule.

17.     A method according to any of claims 9 to 16, wherein the fire-resistant powder is as specified in any of claims 4 to 6.

18.     A method according to any of claims 10 to 17, wherein the amount of the fire-resistant powder is 40 to 60% by weight based on the plastics material excluding the fire-resistant powder.

19.     A method according to any of claims 10 to 18, wherein the fire-resistant powder is such that the intumescent material provided by such powder begins to intumesce on heating at a temperature between the softening temperature and the flow temperature of the plastics material.

20.    A method according to claim 10, substantially as described herein in the Example.

21.    An expanded plastics material according to claim 1, substantially as described herein in the Example.

Claim(s) Nr 20,21 deemed to be abandoned